# EUROPEAN PATENT APPLICATION

(11) **EP 3 444 616 A1**
(43) Date of publication of application: **20.02.2019**
(21) Application number: 17186811.0
(22) Date of filing: 18.08.2017
(51) Int. Cl.: G01N 35/04

(54) **METHOD FOR DETERMINING, WHETHER AN OPENING OF A LABORATORY SAMPLE CONTAINER IS OPEN OR CLOSED, LABORATORY DEVICE AND LABORATORY AUTOMATION SYSTEM**

(71) Applicant: Roche Diagnostics GmbH, 68305 Mannheim (DE); F. Hoffmann-La Roche AG, 4070 Basel (CH)
(72) Inventor: REIN, Michael, 70736 Fellbach (DE); BÄUMLISBERGER, Tim, 71638 Ludwigsburg (DE)
(74) Representative: Patentanwälte Ruff, Wilhelm, Beier, Dauster & Partner mbB

(57) **Abstract**

The invention relates to a method for determining, whether an opening of a laboratory sample container is open or closed. Furthermore, the invention relates to a laboratory device for determining, whether an opening of a laboratory sample container is open or closed, and to a laboratory automation system comprising such a laboratory device.

## Description

### TECHNICAL FIELD AND PRIOR ART

The invention relates to a method for determining, whether an opening of a laboratory sample container is open or closed. Furthermore, the invention relates to a laboratory device for determining, whether an opening of a laboratory sample container is open or closed, and to a laboratory automation system comprising such a laboratory device.

In laboratories some types of instruments and/or analysis require laboratory sample containers such as sample tubes to be open for pretreating and/or analyzing laboratory samples contained by the laboratory sample containers. Furthermore, after pretreating and/or analyzing the laboratory samples it may be required to close the laboratory sample containers, in particular for storing the laboratory samples.

### SUMMARY OF THE INVENTION

It is the object of the invention to provide a method for determining, whether an opening of a laboratory sample container is open or closed. It is a further object of the invention to provide a laboratory device for determining, whether an opening of a laboratory sample container is open or closed, and a laboratory automation system comprising such a laboratory device.

These objects are solved by a method according to claim 1, a laboratory device according to claim 9 and a laboratory automation system according to claim/s 12, 13 and/or 14. Preferred embodiments are defined in the dependent claims.

The invention relates to a method for determining, in particular automatically determining, whether an opening of a laboratory sample container is open or closed. The method comprises the steps: a) determining, in particular automatically determining, a surface profile of the laboratory sample container in the region of the opening. b) determining, in particular automatically determining, whether the opening of the laboratory sample container is open or closed, in dependence of the determined surface profile.

The method enables to determine, whether the opening is open or closed.

The opening may be defined by an end of a wall and/or a circumference of the laboratory sample container. In particular the laboratory sample container may be designed as a tube and may have the opening at an upper, top and/or face end. The laboratory sample container may be made of glass or transparent plastic or any other, in particular somewhat, solid material. The laboratory sample container may be used to contain, store and transport a laboratory sample such as a blood sample, a urine sample or a chemical sample. Typically the laboratory sample, if present, will not fill the laboratory sample container completely, in particular up to the opening. The laboratory sample container and its opening, respectively, may be closed by a cap. The cap may comprise rubber and/or plastic or may completely consist of rubber and/or plastic. The cap may be embodied as a lid, in particular as a rigid lid, or as a foil, in particular a flexible foil.

The surface profile may be a height profile of a height of the laboratory sample container and the cap, if present, parallel to a longitudinal axis of the laboratory sample container over a direction, which may be perpendicular to the axis and/or parallel to a plane defined by the opening. When the opening is closed, the surface profile of the laboratory sample container and the cap, if present, typically will be flat, planar and/or smooth, in particular along the opening. When the opening is open, typically the surface profile will be concave or at least have a deepening, a depression, a recess and/or a hole, in particular along the opening. In particular, the surface profile will go down from the wall, if present, to an inside of the laboratory sample container and will go up from the inside to the wall. Thereby, in step b) it may be determined, whether the opening of the laboratory sample container is open or closed.

Step b) may be performed simultaneously with step a) and/or after step a).

According to an embodiment of the invention step a) comprises non-contact measuring of the laboratory sample container in the region of the opening. This may enable to avoid contaminating or polluting the laboratory sample container and/or the laboratory sample, if present, due to the measuring, in particular when the opening is open. In particular the method does not have to comprise contact measuring of the laboratory sample container in the region of the opening.

According to an embodiment of the invention the non-contact measuring uses ultrasound and/or infrared radiation. Ultrasound and/or infrared radiation are typically capable of interacting with the laboratory sample container, in particular its material, the laboratory sample, if present, and/or the cap, if present. In particular ultrasound and/or infrared radiation are typically capable of being reflected by the laboratory sample container, the laboratory sample and/or the cap.

According to an embodiment of the invention step a) comprises measuring a distance or distances, in particular a distance value or distance values, between a distance meter and the region of the opening of the laboratory sample container and determining the surface profile based on the measured distance/s. In particular the distance may be measured between the distance meter and a surface point of the laboratory sample container, the laboratory sample, if present, or the cap, if present. The distance meter may be adapted to measure the distance. The distance may be measured by non-contact measuring as described above.

According to an embodiment of the invention, the method comprises interchanging, in particular automatically interchanging, a measuring signal between the distance meter and the region of the opening of the laboratory sample container and measuring the distance based on a property, in particular a value of the property, of the interchanged measuring signal. In particular the measuring signal may be adapted to be reflected by the laboratory sample container, the laboratory sample, if present, and/or the cap, if present. The distance meter may be adapted to generate, to send and/or to receive the measuring signal. The measuring signal may be an ultrasound signal and/or an infrared radiation signal. The property may be a time-of-flight, in particular in the case of ultrasound, if present. Additionally or alternatively the property may be a reflection or receiving position, in particular on or in the distance meter and/or in particular in the case of infrared radiation, if present.

According to an embodiment of the invention step a) comprises determining the surface profile from an outside, in particular a top and/or face side, of the opening being opposite to an inside of the laboratory sample container behind the opening. In particular the surface profile may be determined from above. For the different cases, namely the opening is open or closed, the surface profile may be distinctly different. In other words: step a) may comprise sending the measuring signal, if present, towards or in the direction of the opening and the inside. When the opening is closed, the measuring signal may be reflected, in particular from the cap, if present. When the opening is open, the measuring signal may pass through the opening into the inside. There the measuring signal may be reflected back towards the outside.

According to an embodiment of the invention step a) comprises scanning the region of the opening of the laboratory sample container. This may enable to determine the surface profile by a single or only one distance meter or surface profilometer, if present. In other words: step a) may comprise moving the laboratory sample container relatively to the distance meter or the surface profilometer, if present, in particular in the direction, which may be perpendicular to the longitudinal axis of the laboratory sample container and/or parallel to the plane defined by the opening.

According to an embodiment of the invention step a) comprises determining the surface profile from a plurality of measuring locations. This may enable that the laboratory sample container and the distance meter or the surface profilometer, if present, do not have to be relatively moved to each other for the determining of the surface profile. In particular the measuring locations may be located at the outside of the laboratory sample container.

According to an embodiment of the invention the method may comprise outputting an alarm signal, when the opening is open, while it should be closed. Additionally or alternatively the method may comprise outputting the alarm signal, when the opening is closed, while it should be open. In particular the alarm signal may be output optically and/or acoustically. The alarm signal may be output to a user. Additionally a movement, if present, of the laboratory sample container may be stopped, in particular in an alarm case. Outputting the alarm signal and stopping, if present, may be performed simultaneously with step b) and/or after step b).

The invention further relates to a laboratory device for determining, whether an opening of a laboratory sample container is open or closed. The laboratory device comprises a surface profilometer and a determining unit. The surface profilometer is adapted to determine a surface profile of the laboratory sample container in the region of the opening. The determining unit is adapted to cooperate with the surface profilometer and to determine, whether the opening of the laboratory sample container is open or closed, in dependence of the determined surface profile.

In particular the laboratory device may be adapted to perform the method as described above. By means of the method according to the invention, the advantages of the method according to the invention, as discussed above, may be made applicable for the laboratory device.

According to an embodiment of the invention the surface profilometer comprises a distance meter. The distance meter is adapted to measure a distance to the region of the opening of the laboratory sample container. The surface profilometer is adapted to determine the surface profile based on the measured distance. In particular the distance meter may be adapted to measure the distance by the use of ultrasound and/or infrared radiation. The distance meter may be denoted as an ultrasound distance meter, when ultrasound is used. The distance meter may be denoted as an infrared radiation distance meter, when infrared radiation is used. Regarding a structure and/or a function of the ultrasound distance meter or the infrared radiation distance meter reference is made to the relevant technical literature.

According to an embodiment of the invention the surface profilometer comprises a measuring array for determining the surface profile from a plurality of measuring locations. In particular the measuring array may be embodied as a distance meter array comprising a plurality of distance meters as described above located at the measuring locations.

The invention further relates to a laboratory automation system comprising a laboratory device as described above and a movement unit. The movement unit is adapted to move the laboratory sample container relatively to the surface profilometer for scanning the region of the opening by the surface profilometer. In particular the movement unit may comprise or be a conveyor belt or band and/or a laboratory sample distribution system as described in EP 2 995 958 A1. By means of the laboratory device according to the invention, the advantages of the laboratory device according to the invention, as discussed above, may be made applicable for the laboratory automation system.

The invention further relates to a laboratory automation system comprising a laboratory device as described above and a holder. The holder is adapted to hold the laboratory sample container aligned with respect to the surface profilometer for determining the surface profile from an outside of the opening being opposite to an inside of the laboratory sample container behind the opening. In particular the laboratory automation system may comprise a movement unit as described above and the movement unit may be adapted to move the holder with the held laboratory sample container with its opening below the surface profilometer. By means of the laboratory device according to the invention, the advantages of the laboratory device according to the invention, as discussed above, may be made applicable for the laboratory automation system.

The invention further relates to a laboratory automation system comprising a capper and/or a decapper and a laboratory device as described above. The capper, if present, is adapted to put a cap on the opening of the laboratory sample container. The decapper, if present, is adapted to remove the cap from the opening of the laboratory sample container. The laboratory device may enable to determine, whether the capper and/or the decapper work/s properly. Putting the cap on the opening may be denoted as closing the opening. Removing the cap from the opening may be denoted as opening the opening. The capper and/or the decapper may be denoted as a laboratory station/s. The laboratory automation system may comprise a number of laboratory stations. The number of laboratory stations may comprise pre-analytical, analytical and/or post-analytical laboratory stations. Pre-analytical laboratory stations may be adapted to perform any kind of pre-processing of laboratory samples and/or laboratory sample containers. Analytical laboratory stations may be adapted to use a sample or part of the laboratory sample and a reagent to generate a measurement signal, the measurement signal indicating if and in which concentration, if any, an analyte is existing. Post-analytical laboratory stations may be adapted to perform any kind of post-processing of laboratory samples and/or laboratory sample containers. The pre-analytical, analytical and/or post-analytical laboratory stations may comprise at least one of an aliquot station, a centrifugation station, an archiving station, a pipetting station, a sorting station, a tube type identification station, a sample quality determining station, an add-on buffer station, a liquid level detection station, a sealing/desealing station, a pushing station, a belt station, a conveying system station and/or a gripper station for moving the sample container to or from the holder, if present. By means of the laboratory device according to the invention, the advantages of the laboratory device according to the invention, as discussed above, may be made applicable for the laboratory automation system.

According to an embodiment of the invention the laboratory automation system comprises a movement unit. The movement unit is adapted to move the laboratory sample container from the capper, if present, and/or the decapper, if present, to the laboratory device. Furthermore, the movement unit may be adapted to move the laboratory sample container from a laboratory station, if present, to the laboratory device and/or from the laboratory device to the laboratory station.

According to an embodiment of the invention the laboratory device and/or the laboratory automation system may comprise an alarm signal output. The alarm signal output may be adapted to output an alarm signal, when the opening is open, while it should be closed, and/or to output the alarm signal, when the opening is closed, while it should be open. The alarm signal output may comprise or be an optical signal output, in particular a light source, and/or an acoustic signal output, in particular a loudspeaker. Additionally the laboratory automation system may be adapted to stop the movement unit, if present, in particular in an alarm case.

### BRIEF DESCRIPTION OF THE DRAWINGS

In the following, an embodiment of the invention will be described in detail with reference to the drawings. Throughout the drawings, the same elements will be denoted by the same reference numerals.
- Fig. 1: shows a flow chart of a method according to the invention,
- Fig. 2: schematically shows a laboratory automation system comprising a laboratory device according to the invention determining a surface profile of a laboratory sample container with an open opening by the method of Fig. 1,
- Fig. 3: schematically shows the surface profile of the laboratory sample container of Fig. 2,
- Fig. 4: schematically shows the laboratory automation system comprising the laboratory device determining another surface profile of another laboratory sample container with a closed opening by the method of Fig. 1 and
- Fig. 5: schematically shows the surface profile of the laboratory sample container of Fig. 4.

### DETAILED DESCRIPTION OF EMBODIMENTS OF THE INVENTION

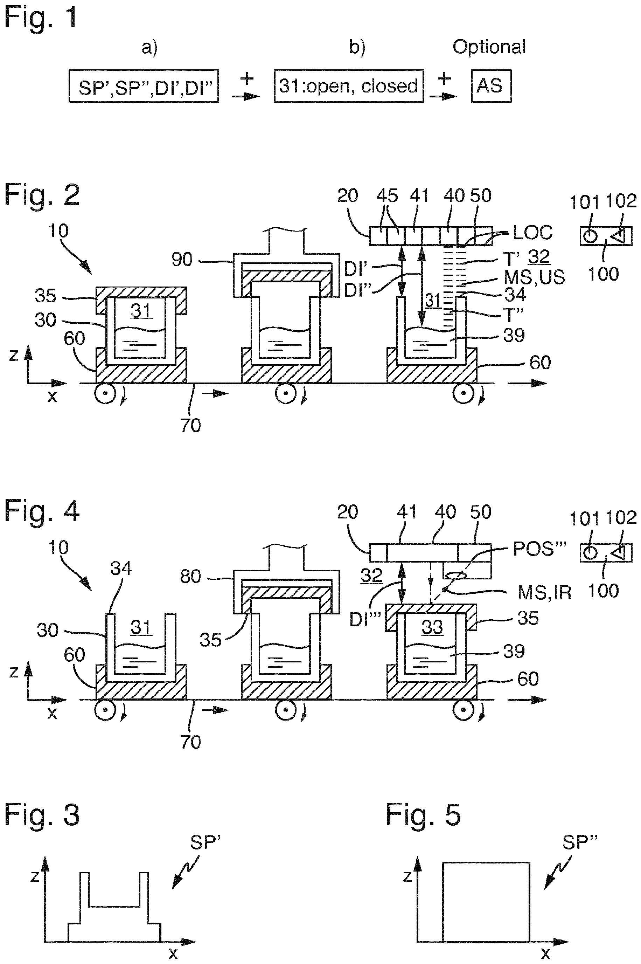

Fig. 1 shows an inventive method for determining, whether an opening 31 of a laboratory sample container 30 is open or closed, as shown in Fig. 2 or 4. The method comprises the steps: a) determining a surface profile SP', SP", as shown in Fig. 3 or 5, of the laboratory sample container 30 in the region of the opening 31. b) determining, whether the opening 31 of the laboratory sample container 30 is open or closed, in dependence of the determined surface profile SP', SP".

Fig. 2 and 4 show an inventive laboratory automation system 10 comprising an inventive laboratory device 20. The laboratory device 20 is adapted for determining, whether the opening 31 of the laboratory sample container 30 is open or closed. The laboratory device 20 comprises a surface profilometer 40 and a determining unit 50. The surface profilometer 40 is adapted to determine the surface profile SP', SP" of the laboratory sample container 30 in the region of the opening 31. The determining unit 50 is adapted to cooperate with the surface profilometer 40 and to determine, whether the opening 31 of the laboratory sample container 30 is open or closed, in dependence of the determined surface profile SP', SP".

In detail a respective laboratory sample container 30 is designed as a tube and has the opening 31 at an upper end of a wall 34, as shown in Fig. 2 at the right and in Fig. 4 at the left. The laboratory sample container 30 contains a laboratory sample 39 in form of a liquid. The laboratory sample container 30 is half-filled by the laboratory sample 39. In other words: a surface of the laboratory sample 39 is significantly away from the opening 31. As shown in Fig. 2 at the left or in Fig. 4 at the right, the opening 31 is closed by a cap 35. In the shown embodiment the cap 35 is embodied as a lid. In alternative embodiments the cap may be embodied as a foil.

The step a) comprises non-contact measuring of the laboratory sample container 30 in the region of the opening 31, in particular by the surface profilometer 40. In detail the non-contact measuring uses ultrasound US, as shown in Fig. 2, or infrared radiation IR, as shown in Fig. 4. In alternative embodiments the non-contact measuring may use either ultrasound or infrared radiation.

In detail the surface profilometer 40 comprises a distance meter 41. The distance meter 41 is adapted to measure a distance DI', DI", DI''' to the region of the opening 31 of the laboratory sample container 30, in particular to a surface point of the wall 34, the laboratory sample 39 or the cap 35. The surface profilometer 40 is adapted to determine the surface profile SP', SP" based on the measured distance DI', DI", DI"'.

Furthermore, step a) comprises measuring the distance DI', DI", DI''' between the distance meter 41 and the region of the opening 31 of the laboratory sample container 30, in particular by the distance meter 41, and determining the surface profile SP', SP" based on the measured distance DI', DI", DI"', in particular by the surface profilometer 40.

In detail the method comprises interchanging a measurement signal MS between the distance meter 41 and the region of the opening 31 of the laboratory sample container 30 and measuring the distance DI', DI", DI''' based on a property T', T", POS''' of the interchanged measuring signal MS.

The measuring signal MS is adapted to be reflected by the laboratory sample container 30 and its wall 34, respectively, the laboratory sample 39 and the cap 35, if present. In Fig. 2 the measuring signal MS is the ultrasound signal US. In Fig. 4 the measuring signal MS is the infrared radiation signal IR. The distance meter 41 is adapted to generate, to send and to receive the measuring signal MS in form of the ultrasound US and/or the infrared radiation IR. In the case of the ultrasound US the property is a time-of-flight T', T" of the measuring signal MS from the distance meter 41 to the region of the opening 31 and back to the distance meter 41. In the case of the infrared radiation IR the property is a reflection or receiving position POS''' on an optical position sensor behind a lens of the distance meter 41.

Moreover, step a) comprises determining the surface profile SP', SP" from an outside 32 of the opening 31 being opposite to an inside 33 of the laboratory sample container 30 behind the opening 31. In Fig. 2 and 4 the surface profile SP', SP" is determined from above the laboratory sample container 30 and its opening 31, respectively.

In detail step a) comprises sending, in particular by the distance meter 41, the measuring signal MS towards or in the direction of the opening 31 and the inside 33, in Fig. 2 and 4 opposite to the z-direction. When the opening 31 is closed, as shown in Fig 4 at the right, the measuring signal MS is reflected back from the cap 35, in particular along the z-direction, and received by the distance meter 41. When the opening 31 is open, as shown in Fig. 2 at the right, the measuring signal MS passes through the opening 31 into the inside 33. There the measuring signal MS is reflected back from the surface of the laboratory sample 39 towards the outside 32 and received by the distance meter 41. Alternatively the measuring signal MS impinges onto the laboratory sample container 30 and its wall 34, respectively, and is reflected back from there.

In Fig. 2 and 4 the measuring signal MS and the ultrasound US or the infrared radiation IR, respectively, runs along or opposite to a longitudinal axis of the laboratory sample container 30 and/or perpendicular to a plane defined by the opening 31 or a holder 60 or a movement unit 70 of the laboratory automation system 10. In alternative embodiments the measuring signal or the ultrasound or the infrared radiation may run under an angle being different from 0 degrees (°) to the longitudinal axis or under an angle being different from 90° to the plane defined by the opening or the holder or the movement unit. In particular for the wall of the laboratory sample container this may enable a relatively larger reflecting surface or echo area. The angle or a value of the angle to the longitudinal axis may be in a range from 0° to 45°, in particular from 15° to 30°. The angle to the plane may be in a range from 90° to 45°, in particular from 75° to 60°.

Further, the laboratory automation system 10 comprises the holder 60. In Fig. 2 and 4, respectively, three holders 60 are shown. In alternative embodiments the laboratory automation system may comprise only one holder, two holders or more than three holders, in particular at least ten holders, in particular at least 100 holders, in particular at least 1000 holders. The holder 60 is adapted to hold the laboratory sample container 30 aligned with respect to the surface profilometer 40 for determining the surface profile SP', SP" from the outside 32 of the opening 31 being opposite to the inside 33 of the laboratory sample container 30 behind the opening 30, as shown in Fig. 2 or 4 at the right.

In Fig. 2 the surface profilometer 40 comprises a measuring array 45 for determining the surface profile SP' from a plurality of measuring locations LOC. In detail the measuring array 45 is embodied as a distance meter array comprising a plurality of distance meters 41 as described above located at the measuring locations LOC. In the shown embodiment the measuring array 45 comprises seven distance meters 41. In alternative embodiments the measuring array may comprise at least two distance meters, in particular at least ten distance meters. In general a plurality of the distance meters comprised by the measuring array and/or the measuring locations may be chosen, such that the surface profile of the laboratory sample container in the region of the opening may be determined at once. In other words: a width of the measuring array may be larger than a width, in particular a diameter, of the laboratory sample container in the region of the opening, in Fig. 2 along the x-direction, in detail at least 0.5 centimeter (cm), in particular at least 1 cm, in particular at least 2 cm. Additionally or alternatively, a density of the distance meters along the measuring array may be at least one distance meter per 0.5 cm, in particular at least one distance meter per 0.25 cm, in particular at least one distance meter per 0.1 cm.

The step a) comprises determining the surface profile SP' from the plurality of measuring locations LOC, in particular by the measuring array 45.

Furthermore, the laboratory automation system 10 comprises the movement unit 70 in form of a conveyor belt. The movement unit 70 is adapted to move the laboratory sample container 30 relative to the surface profilometer 40, in Fig. 2 and 4 along the x-direction to the right, in particular for scanning the region of the opening 31 by the surface profilometer 40, as shown in Fig. 4. The x-direction is perpendicular to the longitudinal axis of the laboratory sample container 30 and parallel to the plane defined by the opening 31. The z-direction is parallel to the longitudinal axis and perpendicular to the plane. In detail the movement unit 70 is adapted to move the holder 60 with the held laboratory sample container 30 with its opening 31 below the surface profilometer 40. This enables determining the surface profile SP" by the single distance meter 41 of the surface profilometer 40 shown in Fig. 4.

Step a) comprises scanning the region of the opening 31 of the laboratory sample container 30, in particular by the surface profilometer 40 or its distance meter 41 and the movement unit 70.

In Fig. 2 the surface profilometer 40 comprises the measuring array 45 comprising the plurality of ultrasound distance meters 41. In alternative embodiments the surface profilometer may comprise a single ultrasound distance meter. The movement unit may be adapted to move the laboratory sample container relative to the surface profilometer comprising the single ultrasound distance meter for scanning the region of the opening by the surface profilometer, as described above for the infrared radiation distance meter. In Fig. 4 the surface profilometer 40 comprises the single infrared radiation distance meter 41. In alternative embodiments the surface profilometer may comprise a measuring array comprising a plurality of infrared radiation distance meters for determining the surface profile from a plurality of measuring locations, as described above for the measuring array comprising the plurality of ultrasound distance meters.

The opening 31 of the laboratory sample container 30 in Fig.4 at the right is closed by the cap 35. Additionally the cap 35 covers the holder 60. The distance DI''' and its value, respectively, between the distance meter 41 and a surface of the cap 35 along the z-direction is constant over a width, in particular a diameter, of the cap 35 along the x-direction. Hence, the property in form of the reflection position POS''' and its value, respectively, of the reflected measuring signal MS in form of the infrared radiation IR is constant over the width of the cap 35. Besides the cap 35 the distance between the distance meter 41 and the movement unit 70 in form of the conveyor belt is different, in particular larger. Hence, the reflection position is different. Thereby, the determined surface profile SP" of the laboratory sample container 30 in the region of the opening 31 is flat along the cap 35, as shown in Fig. 5. Besides the cap 35 the surface profile SP" goes down.

The opening 31 of the laboratory sample container 30 in Fig. 2 at the right is open. The distance DI' and its value, respectively, between the distance meter 41 and a surface of the wall 34 of the laboratory sample container is relatively smaller than the distance DI" and its value, respectively, between the distance meter 41 and the surface of the laboratory sample 39 contained. Hence, the property in form of the time-of-flight T' and its value, respectively, of the reflected measuring signal MS in form of the ultrasound US for the wall 34 is relatively smaller than the time-of-flight T" for the laboratory sample 39. Besides the laboratory sample container 30 the distance between the distance meter 41 and the surface of the holder 60 is relatively larger than the distance DI". Hence, the time-of-flight for the holder 60 is relatively larger than the time-of-flight T". Besides the holder 60 the distance between the distance meter 41 and a surface of the movement unit 70 in form of the conveyor belt is relatively larger than the distance to the holder 60. Hence, the time-of-flight for the movement unit 70 is relatively larger than the time-of-flight for the holder 60. Thereby, the determined surface profile SP' of the laboratory sample container 30 in the region of the opening 31 has a deepening along the laboratory sample container 30, as shown in Fig. 3. In detail the surface profile SP' goes down opposite to the z-direction from the wall 34 to the inside 33 of the laboratory sample container 30 and goes up along the z-direction from the inside 33 to the wall 34 over the x-direction. Besides the laboratory sample container 30 the surface profile SP' goes down to the holder 60 and besides the holder 60 the surface profile SP' goes further down to the movement unit 70.

For the different cases, namely that the opening 31 is open or closed, the surface profiles SP', SP" are distinctly different. Thereby, in step b) it is determined, whether the opening 31 of the laboratory sample container 31 is open or closed.

Moreover, the laboratory automation system 10 comprises a capper 80, as shown in Fig. 4, and a decapper 90, as shown in Fig. 2. In alternative embodiments the laboratory automation system may comprise either the capper or the decapper. The capper 80 is adapted to put a respective cap 35 on a respective opening 31 of a respective laboratory sample container 30. The decapper 90 is adapted to remove a respective cap 35 from a respective opening 31 of a respective laboratory sample container 30.

Further, the movement unit 70 is adapted to move the laboratory sample container 30 from the capper 80 to the laboratory device 20, as shown in Fig. 4, and to move the laboratory sample container 30 from the decapper 90 to the laboratory device 20, as shown in Fig. 2.

The corresponding laboratory device 20 determines, whether the capper 80 or the decapper 90 works properly. When the capper 80 does not work properly, namely the opening 31 is open while it should be closed, the laboratory sample 39 may not be retained by the cap 35 within the laboratory sample container 30, but rather be spilled out of the laboratory sample container 30. This may lead to a contamination or pollution of the laboratory automation system 10 and/or other laboratory samples 39 and/or other laboratory sample containers 30. When the decapper 90 does not work properly, namely the opening 31 is closed while it should be open, this may prohibit handling of the laboratory sample 39, in particular taking out of the laboratory sample 39 from the laboratory sample container 30.

In detail the laboratory automation system 10 and its laboratory device 20, respectively, comprise an alarm signal output 100. The alarm signal output 100 is adapted to output an alarm signal AS, when the opening 31 is open, while it should be closed, and to output the alarm signal AS, when the opening 31 is closed, while it should be open. In the shown embodiment the alarm signal output 100 comprises an optical signal output 101 in form of a light source and an acoustic signal output 102 in form of a loudspeaker. Additionally, the laboratory automation system 10 is adapted to stop the movement unit 70, when the opening 31 is open, while it should be closed, and when the opening 31 is closed, while it should be open.

The method comprises outputting the alarm signal AS, when the opening 31 is open, while it should be closed, and outputting the alarm signal AS, when the opening 31 is closed, while it should be open, in particular by the alarm signal output 100. In detail the alarm signal AS is output optically, in particular by the optical signal output 101, and acoustically by the acoustic signal output 102. Additionally a movement of the laboratory sample container 30 is stopped, in particular the movement unit 70 is stopped, when the opening 31 is open, while it should be closed, and when the opening 31 is closed, while it should be open.

As the shown and above discussed embodiments reveal, the invention provides a method for determining, whether an opening of a laboratory sample container is open or closed. Further, the invention provides a laboratory device for determining, whether an opening of a laboratory sample container is open or closed, and a laboratory automation system comprising such a laboratory device.

## Claims

1. Method for determining, whether an opening (31) of a laboratory sample container (30) is open or closed, the method comprising the steps:
- a) determining a surface profile (SP', SP") of the laboratory sample container (30) in the region of the opening (31) and
- b) determining, whether the opening (31) of the laboratory sample container (30) is open or closed, in dependence of the determined surface profile (SP', SP").

2. Method according to claim 1,
- wherein step a) comprises non-contact measuring of the laboratory sample container (30) in the region of the opening (31).

3. Method according to claim 2,
- wherein the non-contact measuring uses ultrasound (US) and/or infrared radiation (IR).

4. Method according to any one of the preceding claims,
- wherein step a) comprises measuring a distance (DI', DI", DI''') between a distance meter (41) and the region of the opening (31) of the laboratory sample container (30) and determining the surface profile (SP', SP") based on the measured distance (DI', DI", DI''').

5. Method according to claim 4, comprising:
- interchanging a measuring signal (MS) between the distance meter (41) and the region of the opening (31) of the laboratory sample container (30) and measuring the distance (DI', DI", DI''') based on a property (T', T", POS''') of the interchanged measuring signal (MS).

6. Method according to any one of the preceding claims,
- wherein step a) comprises determining the surface profile (SP', SP") from an outside (32) of the opening (31) being opposite to an inside (33) of the laboratory sample container (30) behind the opening (31).

7. Method according to any one of the preceding claims,
- wherein step a) comprises scanning the region of the opening (31) of the laboratory sample container (30).

8. Method according to any one of the preceding claims,
- wherein step a) comprises determining the surface profile (SP') from a plurality of measuring locations (LOC).

9. Laboratory device (20) for determining, whether an opening (31) of a laboratory sample container (30) is open or closed, the laboratory device comprising:
- a surface profilometer (40), wherein the surface profilometer (40) is adapted to determine a surface profile (SP', SP") of the laboratory sample container (30) in the region of the opening (31), and
- a determining unit (50), wherein the determining unit (50) is adapted to cooperate with the surface profilometer (40) and to determine, whether the opening (31) of the laboratory sample container (30) is open or closed, in dependence of the determined surface profile (SP', SP").

10. Laboratory device (20) according to claim 9,
- wherein the surface profilometer (40) comprises a distance meter (41), wherein the distance meter (41) is adapted to measure a distance (DI', DI", DI''') to the region of the opening (31) of the laboratory sample container (30),
- wherein the surface profilometer (40) is adapted to determine the surface profile (SP', SP") based on the measured distance (DI', DI", DI''').

11. Laboratory device (20) according to claim 9 or 10,
- wherein the surface profilometer (40) comprises a measuring array (45) for determining the surface profile (SP') from a plurality of measuring locations (LOC).

12. Laboratory automation system (10), comprising:
- a laboratory device (20) according to any one of claims 9 to 11 and
- a movement unit (70), wherein the movement unit (70) is adapted to move the laboratory sample container (30) relatively to the surface profilometer (40) for scanning the region of the opening (31) by the surface profilometer (40).

13. Laboratory automation system (10), comprising:
- a laboratory device (20) according to any one of claims 9 to 11 and
- a holder (60), wherein the holder (60) is adapted to hold the laboratory sample container (30) aligned with respect to the surface profilometer (40) for determining the surface profile (SP', SP") from an outside (32) of the opening (31) being opposite to an inside (33) of the laboratory sample container (30) behind the opening (31).

14. Laboratory automation system (10), comprising:
- a capper (80), wherein the capper (80) is adapted to put a cap (35) on the opening (31) of the laboratory sample container (30), and/or a decapper (90), wherein the decapper (90) is adapted to remove the cap (35) from the opening (31) of the laboratory sample container (30), and
- a laboratory device (20) according to any one of claims 9 to 11.

15. Laboratory automation system (10) according to claim 14, comprising:
- a movement unit (70), wherein the movement unit (60) is adapted to move the laboratory sample container (30) from the capper (80) and/or the decapper (90) to the laboratory device (20).
